# EUROPEAN PATENT APPLICATION

(11) **EP 4 125 207 A1**
(43) Date of publication of application: **01.02.2023**
(21) Application number: 22185048.0
(22) Date of filing: 14.07.2022
(51) Int. Cl.: H02S 40/22, H02S 20/10

(54) **PHOTOVOLTAIC SYSTEM**

(30) Priority: 29.07.2021 IT 202100020300
(71) Applicant: Falchetti, Gianni, 06035 Gualdo Cattaneo (PG) (IT); Smart Road Marking S.r.l., 06034 Foligno (PG) (IT)
(72) Inventor: FALCHETTI, Gianni, 06035 Gualdo Cattaneo PG (IT); FASANO, Giuseppe, Qingdao, 12-2-2402 (CN)
(74) Representative: Perani & Partners S.p.A.

(57) **Abstract**

A photovoltaic system (1) comprising: a support frame (2) having a first development direction (X-X), a base portion (21) and a top (22) that are opposite to each other along the first development direction (X-X), said support frame (2) having a second development direction (Y-Y), transverse to the first development direction (X-X), a first (23) and a second side (24) that are opposite to each other along the second development direction (Y-Y); a first photovoltaic panel (3) fixed to the support frame (2) and having a front surface (31), arranged parallel to the first side (23), and a rear surface (32), arranged parallel to the second side (24); a first reflecting element (4) connected to the base portion (21) of the support frame (2) and having an upper reflecting surface (41) facing the front surface (31) of the first photovoltaic panel (3) and inclined with respect to the first development direction (X-X) of the support frame (2).

## Description

### Technical field

The present invention relates to a photovoltaic system that can be used in particular, for example, in a farmland for producing electric power.

### State of the art

It is known in the state of the art a photovoltaic system comprising a support frame, configured to be arranged, for example, on a farmland, and photovoltaic panels mounted on such support frame.

Such photovoltaic panels are configured to convert the solar energy into electric power that may be used for powering electrical and/or electronic devices. The photovoltaic system of the prior art thus acts as an electric power generator.

It is also well known that, when the support frame of the system of the prior art is arranged on a farmland, the photovoltaic panels are arranged substantially parallel to that land in order to be hit by the sun rays and maximise the area exposed to the sun rays.

### Problem of the prior art

Disadvantageously, when the photovoltaic system of the prior art is placed, for example, on a farmland, such photovoltaic system makes the portion of land in the immediate surroundings unusable.

In fact, due to their specific arrangement, the photovoltaic panels of the prior art system cover the portion of land below them. In other words, the portion of land arranged in the immediate surroundings of the photovoltaic system of the prior art is intended to only receive such photovoltaic system

In addition, by covering the portion of land below them, the photovoltaic system of the prior art heavily affects the daytime solar radiation of that portion of land. In fact, the portion of land underneath the system of the prior art remains shaded, i.e. it is not reached by the sun rays.

In addition, especially when several photovoltaic systems of the prior art are placed on the same land, such systems negatively affect the appearance of the land itself.

### Summary of the invention

Within this context, the technical task underlying the present invention is to provide a photovoltaic system which overcomes the drawbacks of the prior art.

In particular, it is the purpose of the present invention to propose a photovoltaic system that enables the efficient conversion of the sunlight into electric power while minimising the dimensional footprint associated with the positioning of such a photovoltaic system.

The technical task mentioned and the objects specified are substantially reached by a photovoltaic system comprising the technical features set forth in one or more of the attached claims.

### Advantages of the invention

Advantageously, once placed, e.g., on a farmland, the photovoltaic system described allows to effectively produce electric power from the sun rays and enables the portion of farmland in the immediate surroundings to be used for cultivation and/or animal husbandry.

Still advantageously, the photovoltaic system described allows to maximise the production of electric power when the power itself is mostly used, i.e. around sunrise and sunset.

Still advantageously, the photovoltaic system described allows to collect rainwater and to exploit at the same time the production of electric power during the middle hours of the day, i.e. late morning and early afternoon.

In addition, the photovoltaic system described allows to preserve the portion of land in its immediate surroundings, making it possible to reduce soil erosion and consequently evaporation through the action of the wind.

Still advantageously, the photovoltaic system described requires lower maintenance costs for clearing weeds growing in its immediate surroundings and is characterised by a lower risk of breakage in the event of adverse weather events such as, for example, heavy hailstorms.

### BRIEF DESCRIPTION OF THE DRAWINGS

Further characteristics and advantages of the present invention will become more apparent from the approximate and thus non-limiting description of a preferred, but not exclusive, embodiment of a photovoltaic system illustrated with reference to the enclosed figures, wherein:

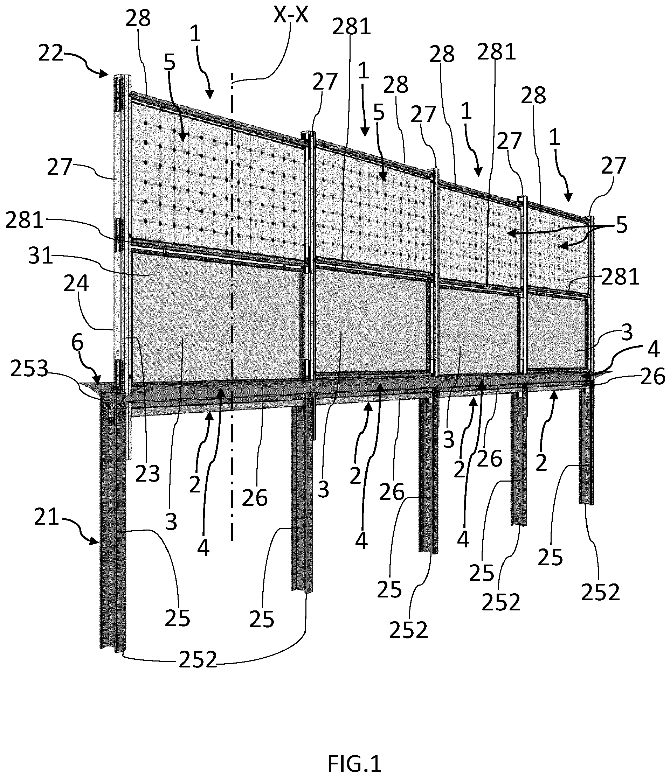

- Figure 1 is a perspective view of a set of photovoltaic systems according to the present invention;

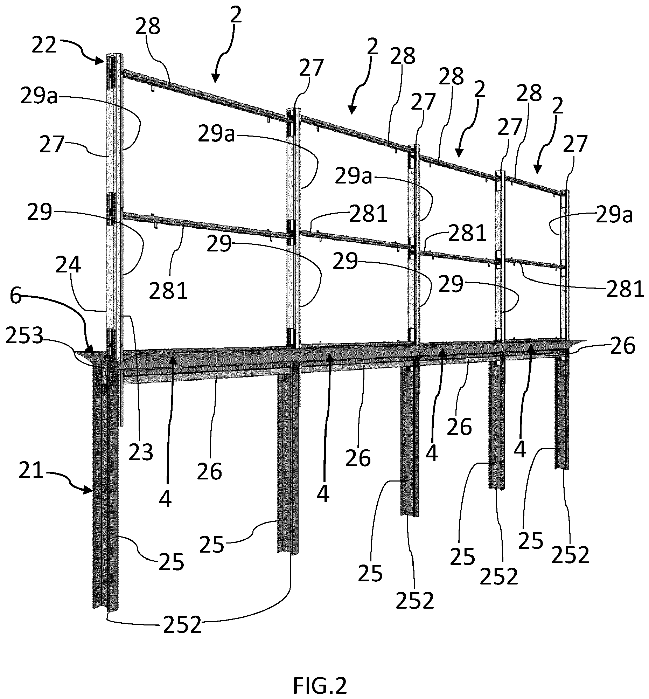

- Figure 2 is a perspective view of a first detail of the set of photovoltaic systems of Figure 1;

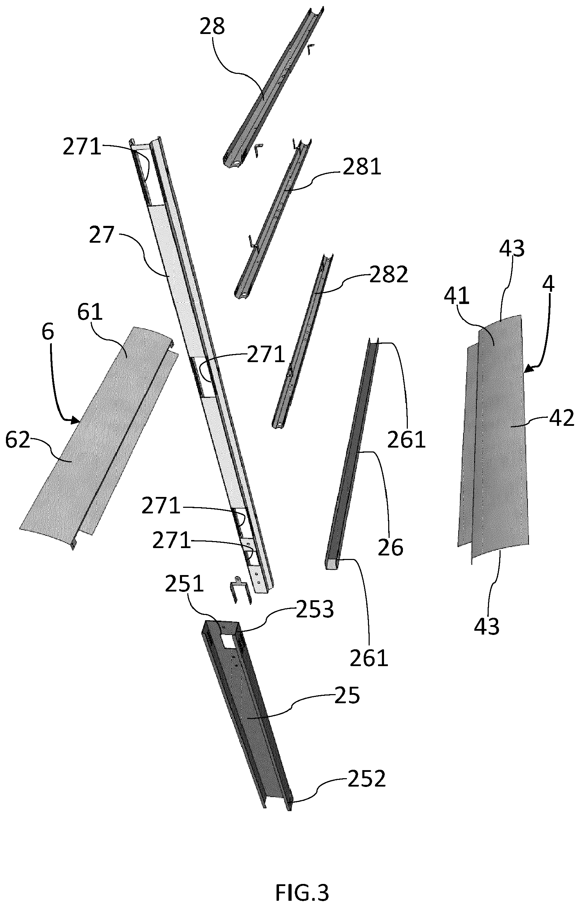

- Figure 3 is an exploded view of a second detail of the set of photovoltaic systems of Figure 1;

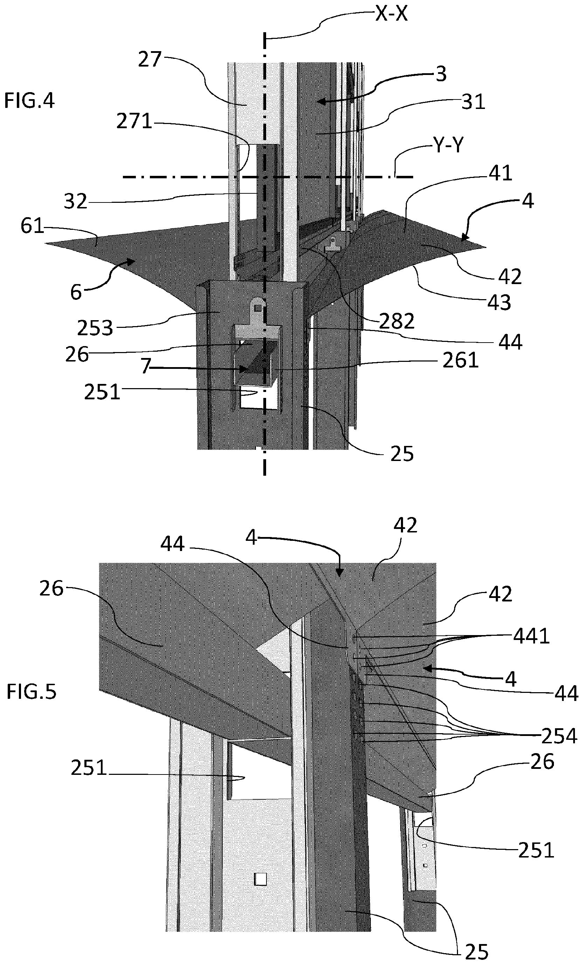

- Figure 4 is a perspective view of a third detail of the set of photovoltaic systems of Figure 1;
- Figure 5 is a perspective view of a fourth detail of the set of photovoltaic system of Figure 1;

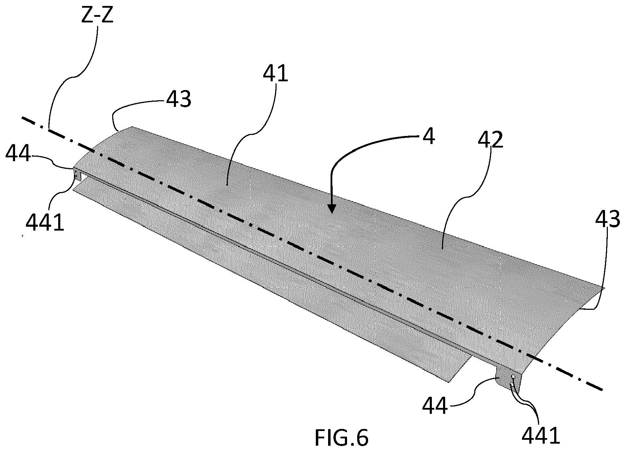

- Figure 6 is a perspective view of a fifth detail of the set of photovoltaic system of Figure 1;
- Figure 7 is a perspective view of a plurality of photovoltaic systems according to a further embodiment of the invention;

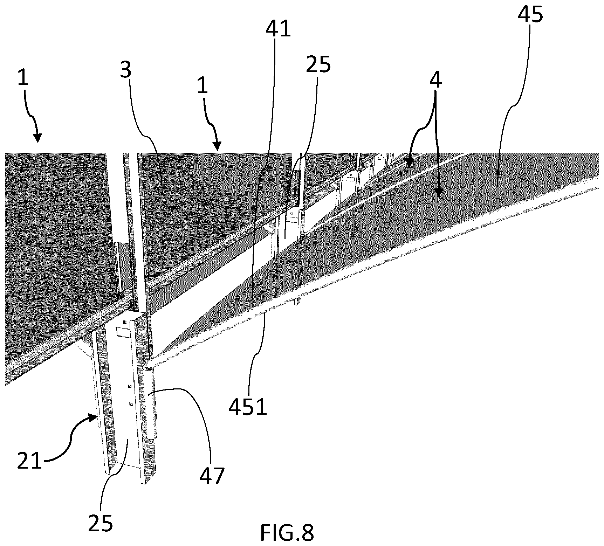

- Figure 8 is a perspective view of a detail of the plurality of photovoltaic systems of Figure 7;

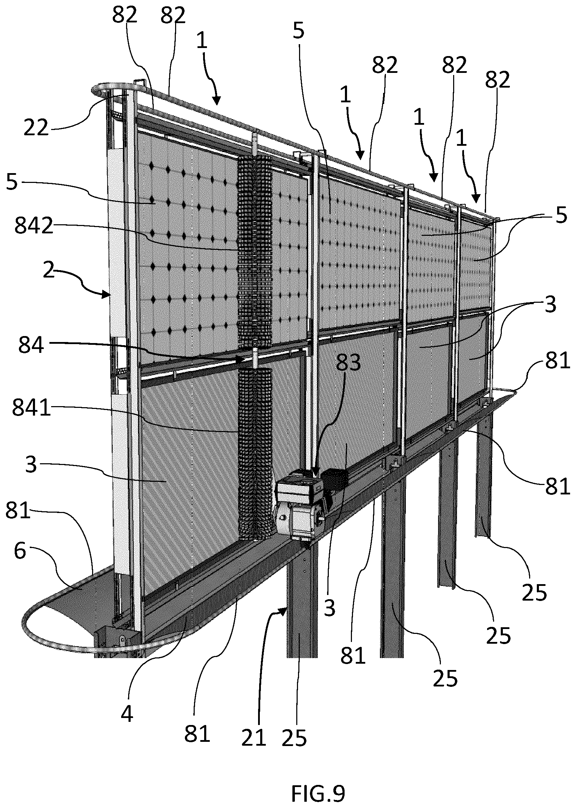

- Figure 9 is a perspective view of a set of photovoltaic systems according to a further embodiment of the invention.

### DETAILED DESCRIPTION

With particular reference to the attached figures, a photovoltaic system is indicated by the number 1.

Such photovoltaic system 1 comprises a support frame 2 having a first development direction X-X. In addition, the support frame 2 has a base portion 21 and a top 22 that are opposite to each other along the first development direction X-X.

According to one aspect, the first development direction X-X is arranged perpendicularly to a support surface when the base portion 21 is arranged on such rest surface. For example, when the photovoltaic system 1 is positioned on a farmland, i.e. when the base portion 21 is placed in contact with such farmland, the first development direction X-X is arranged perpendicularly to such farmland, i.e. the first development direction X-X is substantially vertical.

Furthermore, the support frame 2 has a second development direction Y-Y, transverse to the first development direction X-X. Preferably, the second development direction Y-Y is perpendicular to the first development direction X-X.

In addition, the support frame 2 has a first 23 and a second side 24 that are opposite to each other along the second development direction Y-Y.

The photovoltaic system 1 also comprises a first photovoltaic panel 3 attached to the support frame 2.

For example, the support frame 2 comprises a housing opening 29 passing from the first side 23 to the second side 24 and interposed between the base portion 21 and the top 22. The first photovoltaic panel 3 is inserted and fixed inside such housing opening 29.

Such first photovoltaic panel 3 has a front surface 31, arranged parallel to the first side 23 of the support frame 2, and a rear surface 32, arranged parallel to the second side 24 of the support frame 2. The front surface 31 and the rear surface 32 of the first photovoltaic panel 3 are therefore opposite to each other with respect to the second development direction Y-Y of the support frame 2. In other words, the front surface 31 is arranged on the same side as the first side 23, while the rear surface 32 is arranged on the same side as the second side 24.

The front surface 31 and rear surface 32 of the first photovoltaic panel 3 are arranged, substantially, along the first development direction X-X. In other words, in use, the front surface 31 and rear surface 32 of the first photovoltaic panel 3 are arranged perpendicularly to the ground on which the photovoltaic system 1 is positioned, i.e. they are arranged substantially vertically.

Preferably, in use, the photovoltaic system 1 is positioned in such a way that the first photovoltaic panel 3 has a North/South azimuth orientation. In other words, for example, in use, the front surface 31 faces the East, while the rear surface 32 faces the West.

As it is known to the person skilled in the art, the first photovoltaic panel 3 is configured to produce solar energy from the sunlight incident on such first photovoltaic panel 3.

Preferably, the first photovoltaic panel 3 is a bifacial photovoltaic panel, i.e. one that can absorb sunlight on both the front surface 31 and the rear surface 32. Accordingly, as is well known to the person skilled in the art, such first photovoltaic panel 3 has an electric power generation efficiency at the front surface 31 of at least 20%, for example, and a respective efficiency at the rear surface 32.

The efficiency at the rear surface 32 of the first photovoltaic panel 3 is indicated by a bifaciality coefficient, which can vary from a minimum of 50% to a maximum of 98%. Such bifaciality coefficient indicates, in percentage, how much power the first photovoltaic panel 3 has at the rear surface 32.

For example, if the first photovoltaic panel 3 has a power of 100 Wp and a bifaciality coefficient of 70%, such first photovoltaic panel 3 will have a power of 100 Wp at the front surface 31 and a power of 70 Wp at the rear surface 32. Considering that, in use, the first photovoltaic panel 3 is arranged vertically, such first photovoltaic panel 3 will work both at the front surface 31 and at the rear surface 32, thus allowing for a 170 Wp generator.

In addition, the photovoltaic system 1 comprises a first reflecting element 4 connected to the base portion 21 of the support frame 2.

Such first reflecting element 4 has an upper reflecting surface 41 facing the front surface 31 of the first photovoltaic panel 3 and inclined with respect to the first development direction X-X of the support frame 2.

Preferably, the photovoltaic system 1 comprises a second reflecting element 6 connected to the base portion 21 of the support frame 2. Such second reflecting element 6 has a respective upper reflecting surface 61 facing the rear surface 32 of the second photovoltaic panel 3 and inclined with respect to the first development direction X-X of the support frame 2.

The second reflecting element 6 is therefore opposite the first reflecting element 4 with respect to the second development direction Y-Y of the support frame 2.

It is worth underlying that the sun rays incident on the upper reflecting surface 41 of the first reflecting element 4 are, at least in part, reflected and directed towards the front surface 31 of the first photovoltaic panel 3.

Similarly, the sun rays incident on the upper reflecting surface 61 of the second reflecting element 6 are, at least partially, reflected and directed towards the rear surface 32 of the first photovoltaic panel 3

Advantageously, even when the inclination of the sun rays is not such that they directly hit the first photovoltaic panel 3, these rays reach, at least partially, the first photovoltaic panel 3 allowing it to produce electric power.

In fact, as the photovoltaic system 1 is essentially vertically arranged when in use, the first photovoltaic panel 3 is directly affected by the sun rays to a lesser extent during the middle hours of the day than at the beginning or end of the day. The presence of the first reflecting element 4, on the other hand, allows the first photovoltaic panel 3 to receive reflected sun rays and thus maintain a good power production efficiency even in the middle hours of the day. Similarly, also the presence of the second reflecting element 6 allows the first photovoltaic panel 3 to receive reflected sun rays in the middle hours of the day.

It is worth underlying that, in use, the photovoltaic system 1 allows to produce most of the power when the power is mostly used, i.e. at the beginning and at the end of the day.

It is also worth underlying that, since the first photovoltaic panel 3 is not directly exposed to the sun rays during the middle hours of the day, the operating temperature of the photovoltaic system 1 is lower than that of the prior art systems, increasing the overall efficiency and lower decay of the first photovoltaic panel 3.

In addition, as the photovoltaic system 1 is arranged essentially vertically while in use, such a photovoltaic system 1 promotes a rapid upward heat exchange as the first photovoltaic panel 3 does not hinder the ascent of warmer air.

In addition, as the photovoltaic system 1 is arranged essentially vertically while in use, the first photovoltaic panel 3 requires less maintenance, as it tends to get less dirty than the prior art systems.

Lastly, as the photovoltaic system 1 is arranged essentially vertically while in use, such photovoltaic system 1 allows the portion of land in its immediate surroundings to be used for cultivation and/or animal husbandry. Consequently, the photovoltaic system 1 does not negatively affect the appearance of the land where it is placed.

According to the preferred embodiment of the invention, the upper reflecting surface 41 of the first reflecting element 4 defines with the first development direction X-X of the support frame 2 an angle of inclination greater than 0° and less than or equal to 90°. More preferably, the angle of inclination of the first reflecting element 4 is between 30° and 60°. In the most preferred case, the angle of inclination is equal to 45°.

Preferably, the upper reflecting surface 61 of the second reflecting element 6 also defines the same angle of inclination with the first development direction X-X of the support frame 2.

According to a preferred aspect of the invention, the base portion 21 of the support frame 2 comprises a pair of rest legs 25 and a first crossbar 26.

Each rest leg 25 is arranged along the first development direction X-X, while the first crossbar 26 is arranged along a direction perpendicular to both the first development direction X-X and the second development direction Y-Y. Preferably, each rest leg 25 extends between a support base 252 and an opposite connection area 253 along the first development direction X-X. In use, the support base 252 is in contact with the rest surface on which the photovoltaic system 1 is arranged.

Each rest leg 25 has a respective locking opening 251, while the first crossbar 26 has a pair of terminal ends 261. Preferably, each locking opening 251 is positioned at the connection area 253 of a respective rest leg 25. Each terminal end 261 is inserted and locked into a respective locking opening 251.

Preferably, each terminal end 261 is inserted and locked into a respective locking opening 251 by means of respective locking elements (not illustrated in the accompanying figures) such as, for example, screws and/or bolts.

It is worth underlying that, in use, the first crossbar 26 is spaced along the first development direction X-X from the support surface on which the photovoltaic system 1 is arranged, creating a space between such rest surface and such first crossbar 26. Such space offers better refraction of diffuse light amplified by the first 4 and second reflecting element 6 widely exploiting the Albedo effect.

According to a further preferred aspect of the invention, the support frame 2 comprises a pair of side posts 27. Preferably, each side post 27 is arranged along the first development direction X-X of the support frame 2.

Each side post 27 is coupled to a respective rest leg 25.

Still preferably, the support frame 2 comprises a second crossbar 28. The second crossbar 28 is arranged along a direction transverse to both the first development X-X and the second development direction Y-Y of the support frame 2. In other words, the second crossbar 28 is parallel to the first crossbar 26.

The second crossbar 28 is coupled with the side posts 27 to define, at least partially, the first side 23, the second side 24 and the top 22 of the support frame 2. For example, the second crossbar 28 is locked within the respective additional locking openings 271 of the side posts 27.

Preferably, the second crossbar 28 is spaced from the first crossbar 26 along the first development direction X-X of the support frame 2.

Still preferably, the support frame 2 comprises an intermediate crossbar 281 interposed between the first crossbar 26 and the second crossbar 28 and spaced from both the first crossbar 26 and the second crossbar 28 along the first development direction X-X of the support frame 2.

Such intermediate crossbar 281 is arranged along a direction transverse to both the first development direction X-X and second development direction Y-Y of the support frame 2. In other words, the intermediate crossbar 281 is parallel to both the first crossbar 26 and the second crossbar 28.

The intermediate crossbar 281 is connected to the side posts 27. For example, the intermediate crossbar 281 is locked within the respective further locking openings 271 of the side posts 27.

Preferably, the housing opening 29 is defined by the side posts 27, by the first crossbar 26 and the intermediate crossbar 281.

Always preferably, the support frame comprises an additional housing opening 29a. This further housing opening 29a is defined by the side posts 27, the second crossbar 28 and the intermediate crossbar 281.

According to a preferred aspect of the invention, the photovoltaic system 1 comprises a second photovoltaic panel 5. Such second photovoltaic panel 5 is equal to the first photovoltaic panel 3. In other words, what has been described with reference to the first photovoltaic panel 3 also applies to the second photovoltaic panel 5.

Preferably, the second photovoltaic panel 5 is housed and fixed inside the additional housing opening 29a.

According to a preferred aspect, the support frame 2 comprises a support crossbar 282. Such support crossbar 282 is arranged along a direction transverse to both the first development direction X-X and second development direction Y-Y of the support frame 2. In other words, such support crossbar 282 is parallel to the first crossbar 26, the second crossbar 28 and the intermediate crossbar 281.

Preferably, this support crossbar 282 is fixed to the side posts 27 and is interposed between the first crossbar 26 and the intermediate crossbar 281 and is arranged in the housing opening 29. For example, the support crossbar 282 is inserted and locked within the respective additional locking openings 271 of the side posts 27.

According to a preferred aspect, the first photovoltaic panel 3 is fixed to the support crossbar 282 and the intermediate crossbar 281.

Similarly, still preferably, the second photovoltaic panel 5 is fixed to the intermediate crossbar 281 and the second crossbar 28.

According to a first embodiment of the invention, the first reflecting element 4 comprises a main body 42 having a prevailing development direction Z-Z and a pair of edges 43 that are opposite to each other with respect to the prevailing development direction Z-Z. Preferably, the prevailing development direction Z-Z of the main body 42 is perpendicular to both the first development direction X-X and the second development direction Y-Y of the support frame 2.

According to such first embodiment, the upper reflecting surface 41 of the first reflecting element 4 is defined on the main body 42. Preferably, the main body 42 has a curved profile transverse to the prevailing development direction Z-Z of the main body 42.

Also according to the first embodiment of the invention, the main body 42 of the first reflecting element 4 is made of aluminised steel. Aluminised steel in fact has a "reflecting" effect (mirror effect) that considerably increases the solar radiation incident on the first photovoltaic panel 3. Alternatively, the main body 42 of the first reflecting element 4 is made of another corrosion-resistant and reflecting material.

Also according to the first embodiment of the invention, the first reflecting element 4 comprises a pair of locking portions 44. Each locking portion 44 is made of piece with the main body 42 near a respective edge 43 of the main body 42. Each locking portion 44 has first connection openings 441.

Still according to the first embodiment of the invention, each rest leg 25 has second connection openings 254. Preferably, each rest leg 25 has second connection openings 254 at the respective connection area 253.

Also according to the first embodiment of the invention, each first connection opening 441 is aligned and locked in alignment to a respective second connection opening 254 by means of a respective locking element (not illustrated in the accompanying figures) to connect the first reflecting element 4 to a respective rest leg 25. For example, each locking element comprises a threaded screw, which may be inserted into a first 441 and a second connection opening 254, and a nut which can be screwed onto the threaded screw to lock such threaded screw within said first 441 and second connection opening 254.

According to the first embodiment of the invention, the first reflecting element 4 is then connected to both the rest legs 25 of the base portion 21 of the support frame 2. It is worth underlying that by removing the locking elements, it is possible to disengage the first reflecting element 4 from the base portion 21 of the support frame 2.

According to the first embodiment of the invention, the first crossbar 26 is therefore parallel to the prevailing development direction Z-Z of the main body 42 of the first reflecting element 4.

Still according to the first embodiment of the invention, the photovoltaic system 1 comprises a water collection channel 7 arranged at the base portion 21 of the support frame 2.

Preferably, the water collection channel 7 is placed below the main body 42 of the first reflecting element 4. More preferably, the water collection channel 7 is located in the first crossbar 26.

It is worth underlying that the rainwater received by the first reflecting element 4 is conveyed into such water collection channel 7. In fact, the curved profile of the main body 42 of the first reflecting element 4 promotes conveying rainwater into such water collection channel 7.

Finally, it is worth underlying that, according to the first embodiment of the invention, when the photovoltaic system 1 is arranged on the support surface, the main body 42 of the first reflecting element 4 also has the function of protecting the portion of the rest surface below it from adverse weather events such as, for example, heavy hailstorms.

According to a second embodiment of the invention, alternative to the first embodiment, the first reflecting element 4 comprises a cover 45. Such a cover 45 corresponds, for example, to a glasshouse awning. More preferably, such cover 45 is at least partially transparent.

Still according to such second embodiment, the upper reflecting surface 41 of the first reflecting element 4 is defined on the cover 45. Preferably, the cover 45 has a lower surface 451 that is opposite to the upper reflecting surface 41 with respect to a direction parallel to the first development direction X-X of the support frame 2.

Still according to the second embodiment, the first reflecting element 4 comprises at least one support pole 46 connected to the cover 45 and configured to be arranged on the rest surface. Preferably, still according to the second embodiment, the first reflecting element 4 comprises a pair of support poles 46.

Each support pole 46 extends along a direction parallel to the first development direction X-X of the support frame 2. According to a preferred aspect, each support pole 46 is connected to the cover 45 at the lower surface 451 of such cover 45.

Still according to the second embodiment, the first reflecting element 4 comprises a pair of connection poles 47. Each connection pole 47 is fixed to the base portion 21 of the support frame 2 and is connected to the cover 45. For example, each connection pole 47 is fixed to a respective rest leg 25 and is connected to the cover 45 at the lower surface 451 of said cover 45.

The cover 45 is then supported by support poles 46 and connection poles 47.

It is worth underlying that when the photovoltaic system 1 is placed, for example, on a rest surface corresponding to a farmland, such cover 45 covers the portion of land underneath it, making it possible to create a greenhouse on that portion of land.

It is worth underlying that all the details described with reference to the first reflecting element 4 are also attributable to the second reflecting element 6. In other words, the second reflecting element 6 is essentially the same as the first reflecting element 4.

For example, the second reflecting element 6 may comprise a respective main body 62 or a respective cover 63 and the upper reflecting surface 61 of the second reflecting element 6 is defined on the respective main body 62 or the respective cover 63.

According to a preferred aspect of the invention, the photovoltaic system 1 comprises a pair of first rail segments 81. Each first rail segment 81 is connected to the base portion 21 of the support frame 2. For example, each first rail segment 81 is connected to the base portion 21 of the support frame 2 by a respective first 4 or second reflecting element 6. In addition, the first rail segments 81 are opposite to each other with respect to the second development direction Y-Y of the support frame 2.

Preferably, the first rail segments 81 are connected to each other to define a first path surrounding the support frame 2.

Still according to a preferred aspect of the invention, the photovoltaic system 1 comprises a pair of second rail segments 82. Each second rail segment 82 is connected to the top 22 of the support frame 2. In addition, the second rail segments 82 are opposite to each other with respect to the second development direction Y-Y of the support frame 2.

Preferably, the second rail segments 82 are connected to each other to define a respective second path surrounding the support frame 2.

Still according to a preferred aspect of the invention, the photovoltaic system 1 comprises a trolley 83 movable along each of the first rail segments 81. Preferably, the trolley 83 is motor driven. When operated, the trolley 83 is configured to slide along the respective first rail segment 81 on which it is positioned. Preferably, the trolley 83 is configured to run along the first path defined by the first rail segments 81.

Preferably, the photovoltaic system 1 comprises a cleaning element 84 connectable to the trolley 83 and sliding along each of the second rail segments 82. In other words, the cleaning element 84 is connected to the trolley 83 and may be slidably connected to each of the second rail segments 82.

Still preferably, the cleaning element 84 develops along a direction parallel to the first development direction X-X of the support frame 2.

Still preferably the cleaning element 84 comprises a first 841 and a second brush 842.

The trolley 83 sliding along a respective first rail segment 81 causes the cleaning element 84 to slide along a respective second rail segment 82 to clean the first photovoltaic panel 3.

Preferably, after actuating the trolley 83, the cleaning element 84 is configured to run along the second path defined by the pair of second rail segments 82. Advantageously, the cleaning element 84 cleans both the front surface 31 and the rear surface 32 of the first photovoltaic panel 3.

It is worth underlying that while sliding, the first brush 841 and the second brush 842 remain interposed between the base portion 21 and the top 22 of the support frame 2.

Still according to a preferred aspect of the invention, the photovoltaic system 1 comprises at least a container (not illustrated in the accompanying figures) connectable to the trolley 83 and sliding along each of the first rail segments 81. Such container is configured to hold therein any vegetables harvested from the farmland on which the photovoltaic system 1 is located. The actuation of the trolley 83 allows the container to slide along at least one respective first rail segment 81.

An assembly comprising a plurality of photovoltaic systems 1 is also herein described. Each photovoltaic system 1 of such assembly corresponds to the photovoltaic system 1 described in the present description.

The photovoltaic systems 1 of the assembly are connected to each other. Preferably, adjacent photovoltaic systems 1 share a respective rest leg 25 and a respective side post 27. In fact, preferably, the photovoltaic systems 1 of the assembly are arranged in rows.

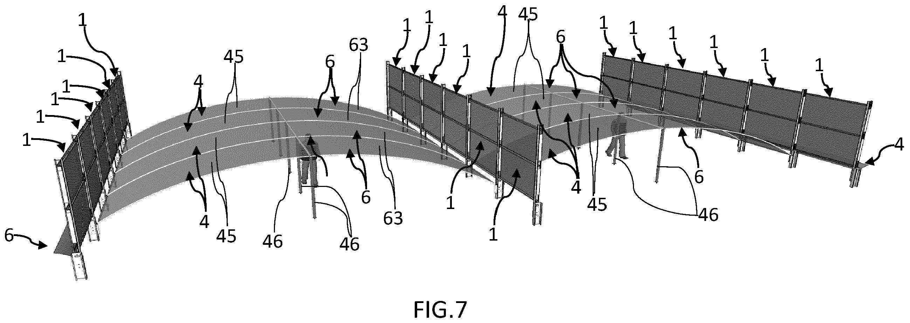

According to a preferred aspect, the photovoltaic systems 1 of the assembly may be arranged in parallel rows. Thereby, cover elements 45, 63 of photovoltaic systems 1 belonging to parallel rows are connected to each other to define a single greenhouse as visible in Figure 7. Still referring to the example visible in Figure 7, adjacent photovoltaic systems 1 share a respective support pole 46 and a respective connection pole 47.

Also according to a preferred aspect, the photovoltaic systems 1 of the assembly, arranged adjacent to each other, have respective first rail segments 81 connected to each other. In other words, in the case of photovoltaic systems 1 of the assembly arranged in a respective row, all the first rail segments 81 of such photovoltaic systems 1 are connected to each other to define a single first path surrounding the support frames 2 of such photovoltaic systems 1 arranged in a row.

Similarly, the photovoltaic systems 1 of the assembly, arranged adjacent to each other, have respective second rail segments 82 connected to each other. In other words, still in the case of photovoltaic systems 1 arranged in a respective row, all the second rail segments 82 of such photovoltaic systems 1 are connected to each other to define a single second path surrounding the support frames 2 of such photovoltaic systems 1 arranged in a row.

Advantageously, a single trolley 83 can slide along the first path and a single cleaning element 84 can run along the second path to clean all the first 3 and second photovoltaic panels 5 of the photovoltaic systems 1 arranged in a row. For example, a single cleaning element 84 may thus clean all the front surfaces 31 and all the rear surfaces 32 of the first photovoltaic panels 3 of photovoltaic systems 1 arranged in a row.

## Claims

1. Photovoltaic system (1) comprising:
- a support frame (2) having a first development direction (X-X), a base portion (21) and a top (22) that are opposite to each other along the first development direction (X-X), said first development direction (X-X) being arranged perpendicularly to a rest surface when the base portion (21) is arranged on said rest surface, said support frame (2) having a second development direction (Y-Y), transverse to the first development direction (X-X), a first (23) and a second side (24) that are opposite to each other along the second development direction (Y-Y);
- a first photovoltaic panel (3) fixed to the support frame (2), said first photovoltaic panel (3) having a front surface (31), arranged parallel to the first side (23), and a rear surface (32), arranged parallel to the second side (24);
**characterised by** comprising:
- a first reflecting element (4) connected to the base portion (21) of the support frame (2), said first reflecting element (4) having an upper reflecting surface (41) facing the front surface (31) of the first photovoltaic panel (3) and inclined with respect to the first development direction (X-X) of the support frame (2).

2. Photovoltaic system (1) according to claim 1, wherein the upper reflecting surface (41) of the first reflecting element (4) defines with the first development direction (X-X) of the support frame (2) an angle of inclination greater than 0° and less than or equal to 90°.

3. Photovoltaic system (1) according to claim 2, wherein the angle of inclination of the first reflecting element (4) is comprised between 30° and 60°, preferably equal to 45°.

4. Photovoltaic system (1) according to any one of claims 1 to 3, wherein the base portion (21) of the support frame comprises a pair of rest legs (25) and a first crossbar (26), each rest leg (25) having a respective locking opening (251), the first crossbar (26) having a pair of terminal ends (261), each terminal end (261) being inserted and locked in a respective locking opening (251).

5. Photovoltaic system (1) according to any one of claims 1 to 4, wherein the first reflecting element (4) comprises a main body (42) having a prevailing development direction (Z-Z) and a pair of edges (43) that are opposite to each other with respect to the prevailing development direction (Z-Z), the upper reflecting surface (41) of the first reflecting element (4) being defined on the main body (42), the main body (42) having a curved profile transversely to the prevailing development direction (Z-Z).

6. Photovoltaic system (1) according to claim 5, wherein the main body (42) of the first reflecting element (4) is made of aluminised steel.

7. Photovoltaic system (1) according to claim 4 and claim 5 or 6, wherein:
- the first reflecting element (4) comprises a pair of locking portions (44), each locking portion (44) being made as one piece with the main body (42) in proximity to a respective edge (43); each locking portion (44) having first connection openings (441); and wherein:
- each rest leg (25) has second connection openings (254), each first connection opening (441) being aligned and locked in alignment with a respective second connection opening (254) by means of a respective locking element in order to connect the first reflecting element (4) to a respective rest leg (25).

8. Photovoltaic system according to any one of claims 1 to 4, wherein the first reflecting element (4) comprises a cover (45), the upper reflecting surface (41) of the first reflecting element (4) being defined on said cover (45), said first reflecting element (4) comprising at least one support pole (46) connected to the cover (45) and configured to be arranged on the rest surface.

9. Photovoltaic system (1) according to any one of claims 1 to 8, comprising:
- a second reflecting element (6) connected to the base portion (21) of the support frame (2), said second reflecting element (6) having a respective upper reflecting surface (61) facing the rear surface (32) of the first photovoltaic panel (3) and inclined with respect to the first development direction (X-X) of the support frame (2).

10. Photovoltaic system (1) according to any one of claims 1 to 9, comprising:
- a pair of first rail segments (81), each first rail segment (81) being connected to the base portion (21) of the support frame (2);
- a pair of second rail segments (82), each second rail segment (82) being connected to the top (22) of the support frame (2);
- a trolley (83), movable along each of the first rail segments (81), and a cleaning element (84) which is connectable to the trolley (83) and sliding along each of the second rail segments (82), the sliding of the trolley (83) along a respective first rail segment (81) resulting in the sliding of the cleaning element (84) along a respective second rail segment (82) to clean the first photovoltaic panel (3).
